# EUROPÄISCHE PATENTANMELDUNG

(11) **EP 2 253 511 A1**
(43) Veröffentlichungstag der Anmeldung: **24.11.2010**
(21) Anmeldenummer: 10466013.9
(22) Anmeldetag: 18.05.2010
(51) Int. Cl.: B60R 7/04, B60R 7/08

(54) **Brillenablagefach im Dachhimmel**

(30) Priorität: 21.05.2009 CZ 20090321
(71) Anmelder: Skoda Auto A.S., 293 60 Mladá Boleslav (CZ)
(72) Erfinder: Budinsky, Marek, 78832 Staré Mesto pod Sneznikem (CZ)

(57) **Zusammenfassung**

Ein Behälter im Dachhimmel für die Ablage von Brillen und zur Vermeidung derer Bewegung im Ablagefach ist im Fahrzeug im vorderen Bereich des Dachhimmels zwischen den Sonnenblenden angeordnet und besteht aus einem Gehäuse (1) und einem einseitig schwenkbaren Deckel (2). Die Darstellung der technischen Lösung liegt darin, dass der Deckel (2) an der Innenseite einen fest angebrachten Haken (13) enthält, der einen in etwa parallel mit dem Deckel (2) des Anlagefaches verlaufenden Endteil (18) umfasst, wobei dieser Endteil (18) des Hakens (13) einen austauschbaren Gummiüberzug (14) enthält, der mindestens eine flexible biegsame Zunge (15) aufweist. Die innere Auflagefläche des Deckels (2) umfasst eine den Haken (13) umschließende und die Rückwand des Deckels (2) ausfüllende erweichte Einlage (11). Die Brille wird mit seinem Nasensteg, der zwischen den Gläsern bzw. den Brillenglasrahmen liegt, zwischen die Einlage (11) und den Haken (13) des Ablagefachdeckels (2) eingesteckt, an dem ein Gummiüberzug (14) mit Zungen (15) aufgesetzt ist.

## Beschreibung

### Technisches Gebiet

Die Erfindung betrifft ein Dachablagefach, das im Dachhimmel eines Fahrzeuges an der Stelle zwischen den Sonnenblenden angeordnet ist und zum Ablegen und Aufbewahren von Brillen im Fahrzeug dient.

### Bisheriger Stand der Technik

Das Brillenablagefach, bekannt aus dem Dokument DE19720364, weist ein einseitig offenes Gehäuse und einen Gehäusedeckel auf, der in eine offene und geschlossene Stellung schwenkbar am Gehäuse angebracht ist. Die Darstellung dieser Lösung liegt darin, dass der Deckel als ein Aufnahmefach zum Einlegen der Brille ausgestaltet ist und dass im Gehäuse ein elastisches Gummiband angebracht ist, in dessen Richtung der Deckel beim Schließen verschwenkt, so dass dieses elastische Band die eingelegte Brille gegen die Innenseite des Fachdeckels drückt, wobei dieses elastische Gummiband beim geschlossenen Deckel in etwa parallel zum Deckel im Gehäuse verläuft. Der Gehäusedeckel weist eine Abstützung für den Nasensteg der in ihm eingelegten Brille auf. An der Innenseite des Deckels, an der Abstützung ist in gewissem Abstand von diesem Gehäusedeckel ein verschiebbarer Brillenhalter angebracht, der mit einer Rastvorrichtung stufenverstellbar ist. In diesen Zwischenraum zwischen einem Brillenhalter und einem Gehäusedeckel kann die Brille eingesteckt werden.

Der Nachteil dieser Lösung liegt in der komplizierten und finanziell aufwändigen Konstruktion des Brillenablagefaches. Weiterer wesentlicher Nachteil liegt darin, dass für verschiedene Brillenformen und -grössen der Halter kompliziert gestuft verstellt werden muss, dh. er hat für eine Position keine universelle, variablere Nutzung. Diese Stufenverstellung kann bei Verwendung verschiedener Brillenformen einen ungleichmäßigen Druck auf die Brille bewirken, wodurch eine Schwingbewegung der Brille verursacht werden kann. Da das elastische Band als ein Gummiband ausgebildet ist, besteht ein weiterer möglicher Nachteil in einer Materialermüdung und in der Haltbarkeit. Das elastische Band kann aus diesen Gründen aufreißen oder sich ausleiern. Beim Aufreißen des Bandes muss dieses kompliziert ausgetauscht werden. Beim Ausleiern des Bandes kann dazu kommen, dass das Band ausgeleiert und der Andruck der Brille unzureichend wird und die Außenstöße unzureichend eliminiert werden, was zur Bewegungen und Klappergeräuschen der Briiie sowie zur Beschädigung der Brillengläser führen kann.

### Darstellung der Erfindung

Diese Aufgabe wird durch eine einfache und sparsame Ausgestaltung eines Brillenablagefaches im Dachhimmel gelöst, das eine Bewegung dieser Brille in dem Ablagefach, das im Fahrzeug im vorderen Teil des Dachhimmels zwischen den Sonnenblenden angeordnet ist, verhindert. Das Ablagefach im Dachhimmel besteht aus einem Gehäuse und einem einseitig schwenkbaren Deckel, der an der Innenseite einen fest angebrachten Haken enthält, wobei der Deckel und Haken einen Bauteil bilden. Dieser Haken umfasst ein mit dem Gehäusedeckel in etwa parallel verlaufenden Endstück, wobei der Haken einen aufsetzbaren und austauschbaren Gummiüberzug enthalten kann. Der elastische Gummiüberzug ist so ausgestaltet, damit ein leichter Austausch dieses Überzugs des am Deckel angebrachten Hakens ermöglicht wird.

Einen Bestandteil dieses Gummiüberzugs bildet mindestens eine, an der Unterseite des Gummiüberzugs ausgebildete, flexible und biegbare Zunge. Der Vorteil dieses elastischen Überzugs mit den Zungen ist die größere Variabilität der Nutzung für Brillen verschiedener Formen und Größen.

Für noch größere Variabilität können verschiedene Aufsätze ausgetauscht werden. Diese Aufsätze können zweckmäßig mit einem, zwei, drei oder mehreren Zungen mit verschiedener Elastizität ausgebildet werden.

An der inneren Auflagefläche des Deckels ist eine den Haken umschließende und die Rückwand des Deckels ausfüllende erweichte Einlage angebracht, wobei diese Einlage als eine Schutzfläche für den Kontakt mit der Brille ausgebildet ist und zum eventuellen Schutz gegen die Brillenbeschädigung dient.

### Übersicht der Figuren der Zeichnungen

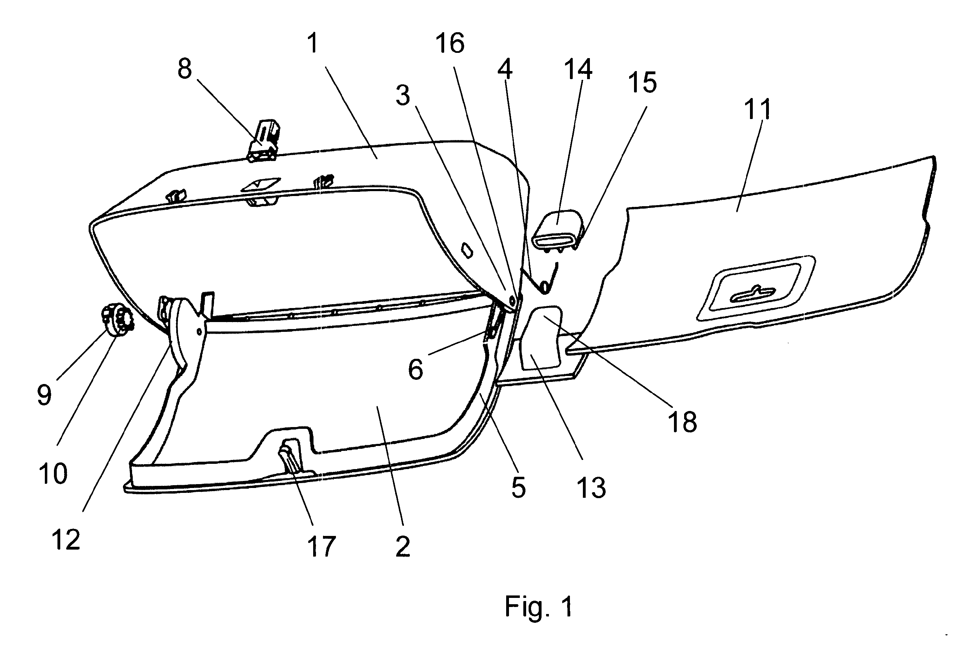

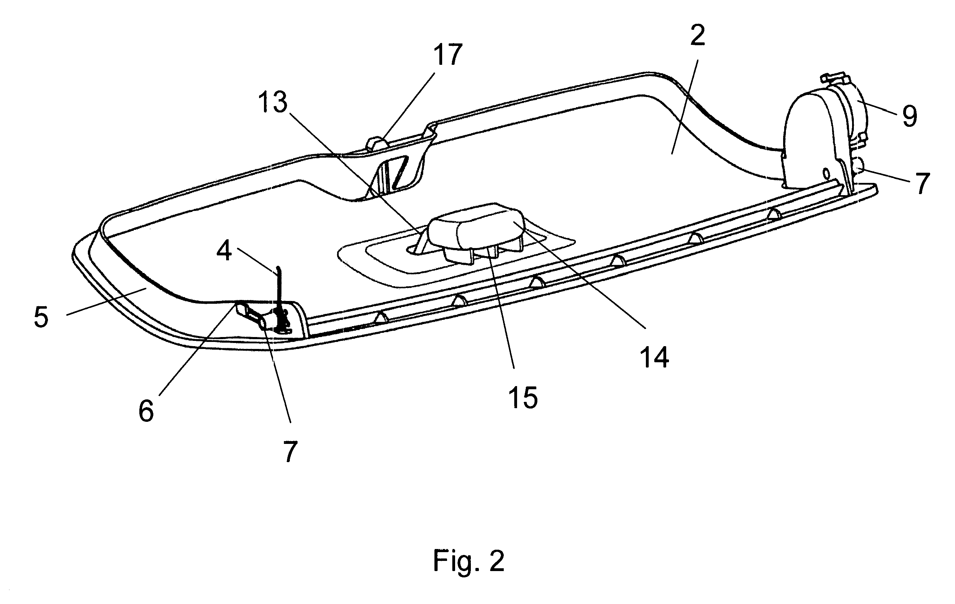

Die Fig. 1 zeigt eine Explosionsdarstellung des Brillenablagefaches im Dachhimmel, die Fig. 2 stellt in einer Axonometrieansicht den Deckel des Brillenablaaefaches im Dachhimmel dar.

### Ausführungsbeispiel der Erfindung

Die Fig. 1 zeigt einen Behälter zur Brillenablage, der deren Bewegung im Gehäuse unterbindet. Der Behälter ist in ein Fahrzeug einbaubar und zwar an der Stelle des im vorderen Bereich des Dachhimmels zwischen den Sonnenblenden befestigten Rahmens. Das Brillenablagefach besteht aus dem eigentlichen Gehäuse 1 des Behälters und einem einseitig schwenkbaren Deckel 2 des Behälters, wobei das Gehäuse 1 des Behälters im Dachhimmel eingebaut ist und der dem Fahrzeuginterieur zugewandte Deckel 2 des Behälters in etwa gleicher Ebene mit dem Dachhimmel verläuft.

Der Deckel ist, nach Fig. 1 und 2, mit seinen seitlichen Schwenkzapfen 7 in die seitlichen Öffnungen 3 im unteren Bereich des Gehäuses 1 des Behälters eingebaut. Das Brillenablagefach umfasst ein PUSH-System 8, wobei das Gehäuse 1 des Ablagefaches in seiner Form und Konstruktion für das Einrasten des PUSH-Systems 8 ausgebildet ist und den Deckel 2 in geschlossener Stellung hält. Von einer Seite ist in das Gehäuse 1 des Brillenablagefaches eine Silikonbremse 9 eingerastet, in deren Zahnrad 10 die Verzahnung 12 des Deckels 2 eingreift. Durch das Abrollen sowie die Funktion der Silikonbremse 9 und das Gewicht des Deckels 2 wird der Deckel 2 mit entsprechender Geschwindigkeit verschwenkt und damit das Ablagefach geöffnet. Der Deckel 2 wird in der offenen Stellung durch eine Formaussparung 16 im hinteren Bereich des Gehäuses 1 gehalten, an der sich der Deckel 2 bei selbsttätiger Erreichung der Endstellung - des maximalen Öffnens abstützt.

Die Aufschwenkung des Deckels nach der Entriegelung mit dem PUSH-System 8, erzielt durch das Eindrücken des Deckels 2 mit einem Finger von der bei geschlossener Stellung des Deckels 2 sichtbaren Seite, wird durch die von einer am Schwenkzapfen 7 des Deckels 2 aufgesetzten Druckfeder 4 hervorgerufene Kraft bewirkt. Die Feder 4 stützt sich mit einem Ende an der Aussparung im Gehäuse 1 des Ablagefaches ab und rastet mit dem zweiten Ende in die Nute 6 im Versteifungsrahmen 5 des Deckels 2 ein.

Zum Deckel 2 ist mit einem HF-Kunststoffschweißverfahren unlösbar ein Haken 13 befestigt. Der Deckel 2 und der Haken 13 bilden somit zusammen einen Bauteil. Der Haken 13 umfasst einen Endstück 18, der in etwa parallel mit dem Deckel des Ablagefaches verläuft und beim offenen Ablagefach dem Gehäuse des Ablagefaches zugewandt ist.

In der Auflagefläche des Deckels 2 ist eine erweichte Einlage 11 angebracht, die den Haken umschließt, die Rückwand des Deckels 2 ausfüllt und so eine Auflagefläche zur Brillenablage bildet, wodurch ein unmittelbarer Kontakt der Brille mit dem Deckelkörper 2 sowie eventuelle Brillenbeschädigung vermieden wird. Für die Sicherstellung der richtigen Funktion des gesamten System des Ablagefaches ist das Ende des Hakens 13 mit einem Gummiüberzug 14 mit flexiblen und biegbaren Zungen 15 ausgestaltet, die sich der Form der eingelegten Brille anpassen.

Da der Überzug aus Gummimaterial erstellt ist, kann mit der Zeit zur Änderung der Eigenschaften kommen, dh. Rissbildung, Verkrustung usw. infolgedessen die geforderten Parameter der Flexibilität und Biegbarkeit verschlechtert werden. Deshalb ist der Überzug auf der Zunge nur aufgesetzt, was einen leichten Austausch des bestehenden Überzugs für einen neuen ermöglicht.

Die Handhabung gem. Fig. 1 und 2 erfolgt so, dass nach dem Eindrücken des Deckels 2 in Richtung zum Gehäuse 1 des Ablagefaches das PUSH-System 8 aktiviert wird, welches das Verriegelungselement 17 des Deckels 2 entriegelt und dieser öffnet sich dann selbsttätig. Nun befindet sich der Deckel 2 in der Endstellung, also maximal geöffnet.

Die Brille wird mit dem Nasensteg zwischen den Gläsern bzw. den Brillenglasrahmen zwischen die Einlage 11 und den Haken 13 mit aufgesetzten Gummiüberzug 14 mit Zungen 15 eingesteckt. So festgeklemmte Brille hat eine festgelegte Position gegenüber dem Deckel 2. Die Zungen 15 des Gummiüberzugs 14 sind so ausgebildet, damit jegliche durch die Stöße infolge der Fahrt des Fahrzeuges verursachte Bewegung unterbindet wird. Durch das Eindrücken des Deckels 2 mit der Hand wird das Brillenablagefach so geschlossen, dass durch das Eindrücken des Deckels 2 und der nachfolgenden Aktivierung des PUSH-Systems 8 der Deckel 2 in geschlossener Stellung verriegelt wird.

Beim Öffnen des Ablagefaches kann die Brille durch deren Vorschub entnommen werden, also mit einer Bewegung außerhalb des Hakens 13 mit den Zungen 15.

Das Gehäuse 1 des Ablagefaches, der Deckel 2 des Ablagefaches sowie der Haken 13 des Deckels können aus einem Kunststoff, Metall oder Holz, oder derer Kombination ausgestaltet werden.

### Industrielle Nutzbarkeit

Das erfindungsgemäße Brillenablagefach kann in allen Fahrzeugen genutzt und vorteilhaft im vorderen Bereich des Dachhimmels zwischen den Sonnenblenden des Fahrzeuges angeordnet werden.

Das erfindungsgemäße Brillenablagefach kann in notwendiger Anzahl an beliebiger für Einbau angepasste und für die Passagiere benutzerfreundlich geeigneter Stelle im Fahrzeuginterieur ausgestaltet werden.

### Verwendete Bezeichnungen

- 1: Gehäuse des Brillenablagefaches
- 2: Deckel des Brillenablagefaches
- 3: Seitenöffnung im unteren Bereich des Gehäuses
- 4: Druckfeder
- 5: Versteifungsrahmen des Deckels
- 6: Nut im Versteifungsrahmen
- 7: Schwenkzapfen des Deckels
- 8: PUSH-System
- 9: Silikonbremse
- 10: Zahnrad der Silikonbremse
- 11: Einlage des Deckels
- 12: Verzahnung des Deckels
- 13: Haken des Deckels
- 14: Gummiüberzug des Hakens
- 15: flexible, biegsame Zunge des Gummiüberzugs
- 16: Formaussparung im hinteren Bereich des Gehäuses
- 17: Verriegelungselement des Deckels
- 18: Endteil des Hakens

## Patentansprüche

1. Ein Brillenablagefach im Dachhimmel, das die Bewegung der Brille im Ablagefach unterbindet und im Fahrzeug im vorderen Bereich des Dachhimmels zwischen den Sonnenblenden angeordnet ist, bestehend aus einem Gehäuse (1) und einem einseitig schwenkbaren Deckel (2), **dadurch gekennzeichnet, dass** der Deckel (2) an der Innenseite einen fest angebrachten Haken (13) enthält, der einen in etwa parallel mit dem Deckel (2) des Ablagefaches verlaufenden Endteil (18) umfasst.

2. Ein Brillenablagefach nach Anspruch 1, **dadurch gekennzeichnet, dass** der Endteil (18) des Hakens (13) einen austauschbaren Gummiüberzug (14) enthält, der mindestens eine flexible biegbare Zunge (15) umfasst.

3. Ein Brillenablagefach nach Anspruch 1 und 2, **dadurch gekennzeichnet, dass** die innere Auflagefläche des Deckels (2) eine den Haken (13) umschließende und die Rückwand des Deckels (2) ausfüllende erweichte Einlage (11) aufweist, wobei diese Einlage (11) als eine Schutzfläche für den Kontakt mit der Brille ausgebildet ist.

4. Ein Brillenablagefach nach den vorstehenden Ansprüche, **dadurch gekennzeichnet, dass** der Deckel (2) und Haken (13) zusammen einen Bauteil bilden.
